# EUROPEAN PATENT APPLICATION

(11) **EP 4 681 984 A1**
(43) Date of publication of application: **21.01.2026**
(21) Application number: 23926632.3
(22) Date of filing: 13.03.2023
(51) Int. Cl.: B60L 58/13

(54) **METHOD FOR CONTROLLING BATTERY OF SERIES HYBRID VEHICLE, AND SERIES HYBRID VEHICLE**

(71) Applicant: Nissan Motor Co., Ltd., Kanagawa 221-0023 (JP)
(72) Inventor: HAMAMOTO, Takayuki, Atsugi-shi, Kanagawa 243-0123 (JP); ABE, Yutaka, Atsugi-shi, Kanagawa 243-0123 (JP); TSUCHIDA, Hirofumi, Atsugi-shi, Kanagawa 243-0123 (JP)
(74) Representative: Hoefer & Partner Patentanwälte mbB
(86) International application number: PCT/JP2023/009511
(87) International publication number: WO 2024/189720

(57) **Abstract**

In a series hybrid vehicle, a controller (6) perform power generation by an internal combustion engine (2) when an SOC of a battery (5) decreases to an SOC lower-limit target value, and ends the power generation when the SOC reaches an SOC upper-limit target value. When a destination is set in a car navigation system (14), a required maximum output of the battery (5) that is predicted on the route to the destination is obtained, and a severity level of the battery (5) is obtained by considering the correlation between battery output and the SOC that corresponds to the battery temperature. When the severity level is low, a low SOC lower-limit target value is selected to extend the distance and time during which EV traveling can continue.

## Description

### TECHNICAL FIELD

The present invention relates to battery control for a series hybrid vehicle that generates power by an internal combustion engine when a battery SOC decreases to a predetermined SOC lower-limit target value and stops the power generation by the internal combustion engine when the battery SOC reaches a predetermined SOC upper-limit target value.

### BACKGROUND TECHNOLOGY

In series hybrid vehicles that generate power by an internal combustion engine and travel using a motor, in many cases, the traveling of the vehicles that consumes battery power and the power generation by the internal combustion engine are controlled such that an SOC of the battery is maintained within an appropriate range. For example, an SOC lower-limit target value and an SOC upper-limit target value of the battery are predetermined, and when the SOC of the battery decreases to the SOC lower-limit target value due to traveling by the driving motor, power generation by the internal combustion engine is performed, and when the SOC recovers to the SOC upper-limit target value, the power generation by the internal combustion engine is ended. In addition, hereinafter, traveling using a traveling motor while the internal combustion engine is stopped is referred to as "EV traveling," and traveling using the traveling motor while generating power by the internal combustion engine is referred to as "HEV traveling."

For general users, it is undesirable for the internal combustion engine to be driven frequently when driving a series hybrid vehicle. From the point of view of global environment, it is desirable that the frequency of the internal combustion engine operation (namely, HEV traveling) that emits exhaust gases is minimized as much as possible.

Therefore, for example, when assuming that the battery is sufficiently charged at the start of driving, it is desirable to enable EV traveling for as long as possible (or over as long a distance as possible) after the start of driving.

On the other hand, as a characteristic of batteries, the maximum output of the battery decreases as the SOC decreases. Therefore, when considering situations where high output is required, such as uphill slopes, it is necessary to avoid excessive SOC reduction, and it cannot be achieved to continue EV traveling for a sufficiently long time while setting the SOC lower-limit target value for SOC low. Consequently, the SOC lower-limit target value needs to be set relatively high, and in many situations, power generation by the internal combustion engine starts at an unnecessarily high SOC lower-limit target value.

That is, under a fixed battery capacity, it is generally difficult to achieve both extending EV traveling as long as possible and ensuring output of the battery, for example, on uphill slopes.

A patent document 1 discloses a battery control that, in collaboration with a car navigation system, reduces the SOC to a low level in advance when a long downhill slope is predicted, allowing the SOC to return to an appropriate intermediate range by regeneration during the downhill slope.

However, the technology described in the patent document 1 does not achieve both extending EV traveling as long as possible and ensuring sufficient output of the battery on uphill slopes, as described above.

### PRIOR ART DOCUMENT(S)

### PATENT DOCUMENT(S)

Patent Document 1: Japanese Patent Application Publication No. 2002-171603

### SUMMARY OF THE INVENTION

The present invention is a method for controlling a battery of a series hybrid vehicle including a generator driven by an internal combustion engine, a motor for traveling, and the battery for supplying power to the traveling motor, wherein power generation by the internal combustion engine is performed when an SOC of the battery decreases to a predetermined SOC lower-limit target value, and the power generation by the internal combustion engine is ended when the SOC reaches a predetermined SOC upper-limit target value, the method comprising: determining whether a destination is set in a car navigation system; obtaining a required maximum output of the battery that is predicted on a route to the destination, when the destination is set; and setting the SOC lower-limit target value that satisfies the required maximum output based on the required maximum output of the battery that is predicted and a correlation between the SOC and battery output.

For example, when the maximum output required for the battery that is predicted on the route to the destination is high, the SOC lower-limit target value is set to a relatively high value that can satisfy the required maximum output, taking into account the correlation between the SOC and the battery output. Consequently, the required maximum output that may be generated on the route is reliably satisfied.

On the other hand, when the required maximum output of the battery that is predicted on the route is low, the SOC lower-limit target value is set to a relatively low value. Consequently, when EV traveling is started from a state in which the battery is charged to some extent, a longer time or distance for continuing EV traveling can be obtained.

### BRIEF DESCRIPTION OF THE DRAWINGS

FIG. 1 is a configuration explanatory diagram showing the system configuration of a series hybrid vehicle that is one embodiment of the present invention.
FIG. 2 is a characteristic diagram showing the characteristics of battery output with respect to the battery temperature and an SOC.
FIG. 3 is a flowchart showing the control flow of one embodiment.
FIG. 4 is an explanatory diagram showing an example of SOC changes in the case of a severity level C.
FIG. 5 is an explanatory diagram showing an example of SOC changes in the case of a severity level B.
FIG. 6 is an explanatory diagram showing an example of SOC changes in the case of a severity level A.
FIG. 7 is an explanatory diagram showing an example of SOC changes when no destination is set.

### MODE FOR IMPLEMENTING THE INVENTION

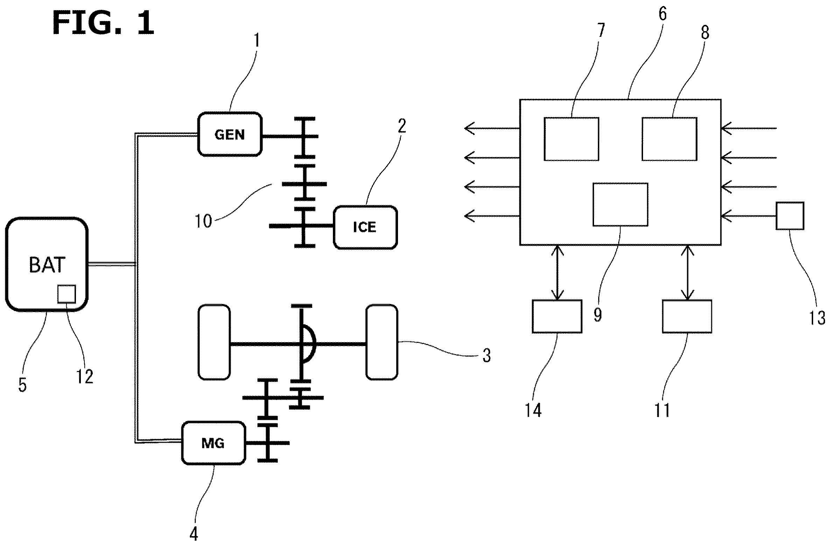

In the following, one embodiment of the present invention will be explained in detail with reference to the drawings. FIG. 1 schematically showing the configuration of a series hybrid vehicle to which the present invention is applied.

The series hybrid vehicle is provided with a motor generator 1 for power generation that is mainly operated as a generator, an internal combustion engine 2 used as a power generation internal combustion engine to drive the power generation motor generator 1 according to power generation requests, a motor generator 4 for traveling that is mainly operated as a motor to drive drive wheels 3, and a battery 5 composed of secondary batteries such as lithium-ion batteries (liquid lithium-ion batteries) or all-solid-state batteries for temporarily storing the generated power. In one embodiment, the power generation motor generator 1 is driven by the internal combustion engine 2 via a gear train 10. The electric power obtained by the internal combustion engine 2 driving the power generation motor generator 1 is stored in the battery 5 via an inverter device not shown. The traveling motor generator 4 is driven and controlled using the power of the battery 5. The power generated during regeneration of the traveling motor generator 4 is also stored in the battery 5 via an inverter device (not shown). In addition, although not shown, the configuration may also be a so-called plug-in hybrid type, in which the battery 5 can be charged from an external power source such as a commercial power source.

The operation of the motor generators 1 and 4, the charging and discharging of the battery 5, and the operation of the internal combustion engine 2 are controlled by a controller 6. The controller 6 is composed of a plurality of controllers, such as a motor controller 7 that controls the motor generators 1 and 4, an engine controller 8 that controls the internal combustion engine 2, and a battery controller 9 that manages the battery 5, which are connected to each other in a manner that allows communication. The controller 6 receives information of the opening degree of the accelerator pedal not shown, vehicle speed, and the like. In addition, the battery controller 9 obtains the SOC of the battery 5 based on the voltage and current of the battery 5. In addition, the battery 5 is equipped with a battery temperature sensor 12 that detects the battery temperature. The vehicle is equipped with an outside air temperature sensor 13 that detects the outside air temperature. The controller 6 acquires information of the battery temperature and outside air temperature from the sensors 12 and 13.

A vehicle in one embodiment is equipped with a car navigation system 14 using a so-called GPS, so as to provide route guidance when the driver sets a desired destination. The map data provided by the car navigation system 14 includes road type (for example, expressway or ordinary road), speed limits, gradient information, and the like. Furthermore, the vehicle of one embodiment is equipped with a communication device 11 that communicates with a cloud server (not shown) and other vehicles traveling in the vicinity, as a so-called connected system. It is possible to acquire information of the environment (weather, and the like), congestion conditions, and the like on the route via the communication device 11.

The traveling modes of such a series hybrid vehicle include an EV traveling mode in which the vehicle travels using only the power from the battery 5 without combustion operation of the internal combustion engine 2 (namely, power generation or charging), and an HEV traveling mode in which the vehicle travels while generating power by combustion operation of the internal combustion engine 2. The battery controller 9 manages the charging and discharging of the battery 5 such that the SOC of the battery 5 is maintained between a predetermined SOC upper-limit target value and SOC lower-limit target value. For example, when the SOC decreases due to EV traveling and reaches the SOC lower-limit target value, the internal combustion engine 2 is started via the engine controller 8, and the traveling is shifted to HEV traveling. The power generation by the internal combustion engine 2 is ended, for example, when the SOC reaches the SOC upper-limit target value. Regenerative power is also controlled by an appropriate method such that the SOC of the battery 5 does not exceed the SOC upper-limit target value.

Here, in the series hybrid vehicle in one embodiment, the SOC lower-limit target value is discretely pre-set at a plurality of levels according to the battery output that needs to be ensured on the route, and one of these levels is selected according to whether a destination is set in the car navigation system 14 and a predicted severity level. Specifically, a first SOC lower-limit target value, a second SOC lower-limit target value, a third SOC lower-limit target value, and a fourth SOC lower-limit target value are set in descending order of SOC, and any one of these is selectively used. Under the highest first SOC lower-limit target value, the highest battery output and vehicle driving force are ensured.

In addition, the SOC upper-limit target value is set for each of the levels of the SOC lower-limit target value, and the lower the level of the SOC lower-limit target value is, the lower the SOC upper-limit target value is. That is, corresponding to the first to fourth SOC lower-limit target values, a first SOC upper-limit target value, a second SOC upper-limit target value, a third SOC upper-limit target value, and a fourth SOC upper-limit target value are set respectively, and the fourth SOC upper-limit target value corresponding to the lowest SOC.

In addition, according to the temperature of battery 5, at least one of the first to fourth SOC lower-limit target values and the corresponding first to fourth SOC upper-limit target values may be corrected such that the SOC control range between the SOC upper-limit target value and the SOC lower-limit target value becomes relatively wider on the high temperature side. For example, using the fourth SOC lower-limit target value and the fourth SOC upper-limit target value as examples, as the temperature of the battery 5 increases, the fourth SOC lower-limit target value is lowered, while the fourth SOC upper-limit target value is kept constant regardless of temperature, thereby widening the SOC control range as the temperature increases. The temperature of the battery 5 can be obtained not only from the detection value of the battery temperature sensor 12 but also from the detection value of the outside air temperature sensor 13 or estimated values based on weather information obtained via the communication device 11.

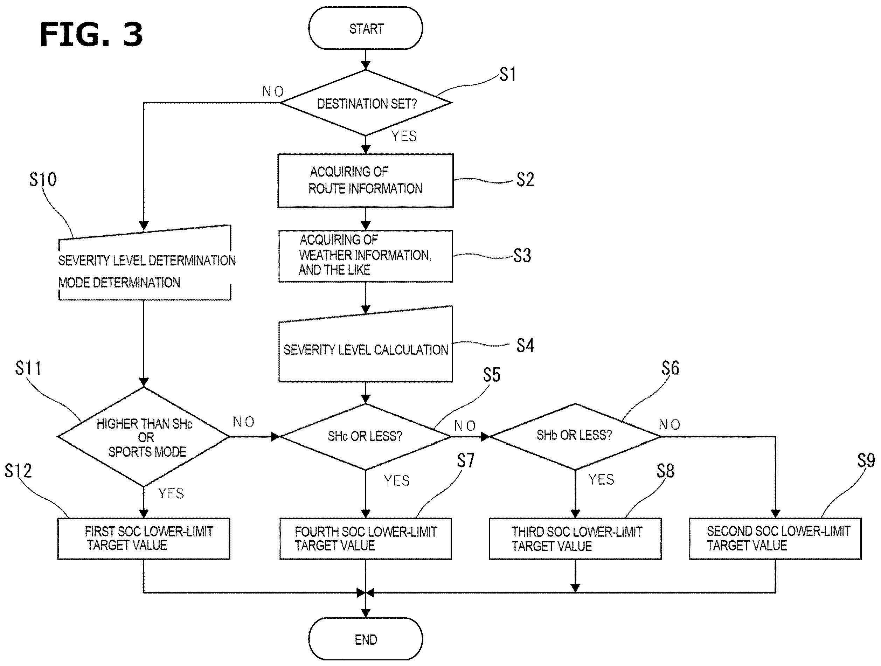

Next, referring to the flowchart in FIG. 3, the flow of processing performed by the controller 6 in one embodiment will be explained. First, in a step 1, it is determined whether a destination is set in the car navigation system 14. When the destination is set, the process proceeds to a step 2, and various information about the route to the destination is acquired mainly from the car navigation system 14. For example, the information includes the distance to the destination, the slope (gradient) of the roads on the route, the elevation, and whether the road is an ordinary road or an expressway. Next, the process proceeds to a step 3, and information of the weather, temperature, and traffic congestion, and the like on the route to the destination is acquired from the so-called Internet via the communication device 11.

Next, the process proceeds to a step 4 and the severity level is determined based on the information acquired from the car navigation system 14 in the step 2 and the environmental information acquired from the Internet in the step 3. The severity level is an indicator that quantifies the strictness of the requirements for the battery 5 on the route to the destination. Basically, the severity level correlates with the required maximum output of the battery 5 on the route, which is predicted based on the gradient information and vehicle speed information on the route. The larger the gradient is, the higher the required maximum output of the battery 5 is, and the higher the vehicle speed on an expressway is, the higher the required maximum output of the battery 5 is. The higher the predicted required maximum output of the battery 5 is, the higher the severity level is.

Preferably, weather information (particularly rainfall, snowfall, and the like) on the route to the destination is acquired, and corrections related to road conditions are applied to calculate the severity level.

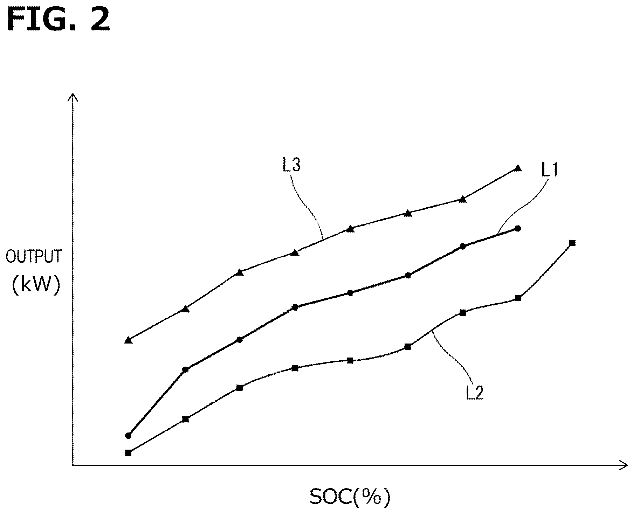

Furthermore, when calculating the severity level, the battery characteristics shown in FIG. 2, namely, the correlation between the battery output and the SOC that corresponds to the battery temperature is taken into account. In FIG. 2, there is shown three characteristic curves as examples: a characteristic curve L1 at normal temperature (25°C), a characteristic curve L2 at relatively low temperatures, and a characteristic curve L3 at relatively high temperatures. As can be seen from these characteristic curves L1, L2, and L3, the output of the battery 5 decreases as the SOC decreases. Furthermore, the relationship between the SOC and the output is correlated with the temperature of the battery 5, such that the lower the temperature of the battery 5 is, the lower the output is under the same SOC. In other words, when ensuring a certain battery output (which is essentially the required maximum output that is predicted plus an appropriate margin) during travel to the destination, a higher SOC needs to be maintained as the temperature of battery 5 is lower. Therefore, the lower the temperature of the battery 5 is, the higher the severity level becomes relatively.

The quantified severity level is classified into three levels, A, B, and C, by sequentially comparing it with predetermined thresholds SHc and SHb (where SHc < SHb) in steps 5 and 6. When the severity level is equal to or less than the threshold SHc in the step 5, it is classified into the lowest severity C, and the process proceeds to a step 7 to select a lowest fourth SOC lower-limit target value and a corresponding fourth SOC upper-limit target value. When the severity level is equal to or less than the threshold value SHb in the step 6, it is classified into the intermediate severity level B, and the process proceeds to a step 8 to select a second-lowest third SOC lower-limit target value and a corresponding third SOC upper-limit target value. When the severity level exceeds the threshold value SHb, it is classified into the highest severity level A, and process proceeds to a step 9 to select a second SOC lower-limit target value and a corresponding second SOC upper-limit target value.

On the other hand, when no destination is set in the car navigation system 14, the process proceeds from the step 1 to a step 10 and the severity level as described above is calculated within the driving range of the driver that is estimated based on learning. For example, in the case of a driver who commutes daily from home to the office, it can be estimated that the driver is heading to the same office based on the start time of the vehicle and its location. Therefore, even without a destination setting, the required maximum output of the battery 5 during traveling is predicted within a relatively narrow distance range, and the severity level is obtained by considering the battery characteristics as described above. In the step 10, information is acquired as to whether the driver has selected an acceleration-emphasized mode, commonly known as sports mode, as the traveling mode of the vehicle.

Next, in a step 11, it is determined whether the severity level is higher than the threshold SHc or whether the vehicle is in sports mode. When the severity level is higher than the threshold SHc or when the vehicle is in sports mode, the process proceeds to a step 12, and the highest first SOC lower-limit target value and first SOC upper-limit target value are selected. When the result is NO in the step 11, the process proceeds to the step 5 and one of the second to fourth SOC lower-limit target values and a corresponding one of the second to fourth SOC upper-limit target values are selected according to the severity level.

In addition, as mentioned above, according to the temperature of the battery 5, at least the first to fourth SOC lower-limit target values or the corresponding first to fourth SOC upper-limit target values (for example, the SOC lower-limit target value) may be corrected such that the SOC control range between the SOC upper-limit target value and the SOC lower-limit target value is relatively widened on the high-temperature side.

Furthermore, the SOC upper-limit target value when a destination is set may be variably set by considering the required maximum output of the battery that is predicted on the route, based on the travel distance to the destination, the predicted regeneration amount on downhill slopes, and the gradient information and vehicle speed information on the route to the destination.

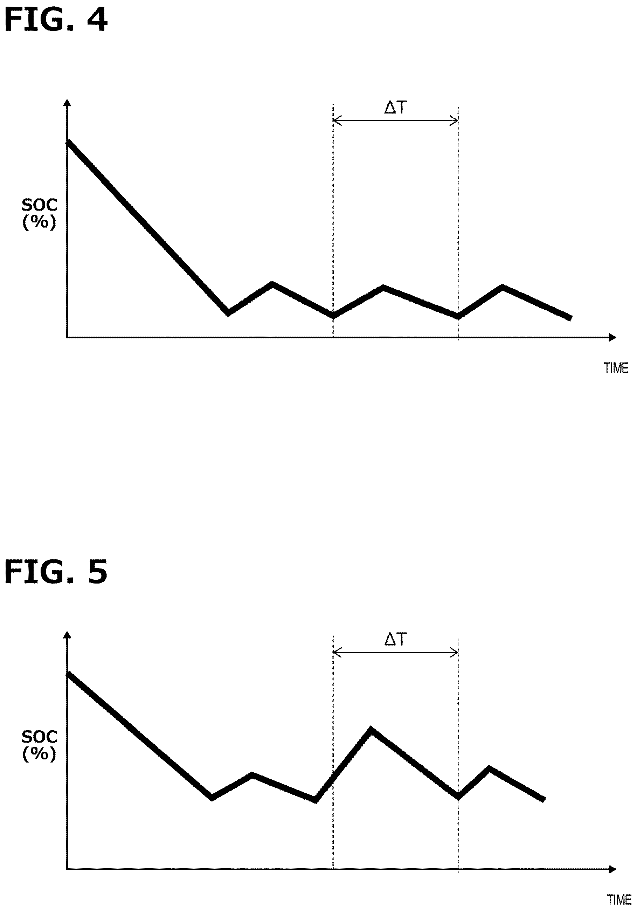

In FIG. 4, there is shown an example of changes in SOC during traveling in the case of the severity level C. Basically, the SOC decreases during EV traveling and increases during HEV traveling or regeneration on downhill slopes. The characteristic polygonal line in FIG. 4 is schematically drawn for illustrative purposes and is not necessarily accurate. In addition, a period ΔT in the drawing schematically indicates the maximum output period. In the case of the severity level C, the fourth SOC lower-limit target value and fourth SOC upper-limit target value which are the lowest among the plurality of levels are selected. At the start of traveling, it is assumed that the battery 5 has been sufficiently charged, and the operation of the vehicle starts as EV traveling. EV traveling continues until the SOC of the battery 5 decreases to the fourth SOC lower-limit target value. Since the fourth SOC lower-limit target value is set sufficiently low, the distance or time during which EV traveling can be continued is extended. As a result, the frequency of power generation by the internal combustion engine 2 until the destination is reduced, thereby improving overall fuel efficiency when combining EV traveling and HEV traveling. In addition, it is advantageous for reducing exhaust gas emissions.

Here, when the SOC lower-limit target value and SOC upper-limit target value are set low, the effect of natural discharge when the vehicle is not used for long periods of time become relatively large. Therefore, for example, it may be controlled such that the amount of the power generation by the internal combustion engine 2 is set to be large when the vehicle approaches the vicinity of the destination to keep the SOC of the battery 5 when the vehicle stops at high to a certain level.

In FIG. 5, there is shown an example of changes in SOC during traveling in the case of the severity level B. In this case, the third SOC lower-limit target value and third SOC upper-limit target value which are the second lowest among the plurality of levels are used, and EV traveling continues until the SOC decreases to the third SOC lower-limit target value after traveling starts. Therefore, the distance or time during which EV traveling can continue after traveling starts is relatively long. In addition, at this time, since the SOC lower-limit target value is higher than that in the case of the severity level C, the battery output that is ensured during traveling is higher than in the case of the severity level C. Therefore, it is sufficiently possible to handle a certain degree of uphill slopes or high-speed traveling on the route.

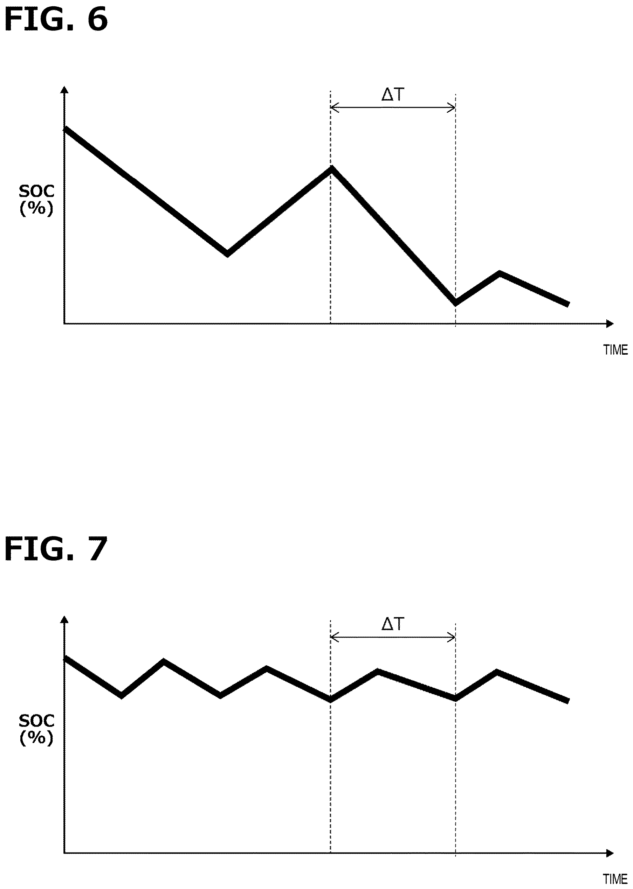

In FIG. 6, there is shown an example of changes in SOC during traveling in the case of the severity level A. In this case, the second SOC lower-limit target value and second SOC upper-limit target value which are higher than those in the case of the severity level B are selected. Therefore, the distance or time during which EV traveling can continue after traveling stars is relatively short. However, at this time, since the SOC lower-limit target value is higher than that in the case of the severity level B, the battery output that is ensured during traveling is even higher than in the severity level B. Therefore, the battery output required for steep uphill slopes on the route can be reliably ensured.

In FIG. 7, there is shown an example of changes in SOC during traveling when there is no destination setting and the severity level is higher than the threshold SHc or when the vehicle is in sports mode. In this case, the first SOC lower-limit target value and first SOC upper-limit target value are used which are higher than those when the destination is set. Therefore, high battery output is always ensured, thereby handling so-called sports driving.

By the way, a control is known that prohibits the operation of the internal combustion engine 2 during low vehicle speeds at which so-called background noise is low in order to suppress the sensuous noise level for occupants including the driver. In this case, the vehicle speed threshold may be corrected based on the above-mentioned severity level. For example, by permitting the operation of the internal combustion engine 2 from relatively lower vehicle speeds as the severity level is high, early recovery of the SOC can be achieved.

Furthermore, when the destination is set and EV traveling is being performed with the fourth SOC lower-limit target value and the fourth SOC upper-limit target value set as the low severity level C, there is possibility that the driver switches to sports mode. In this case, the setting is switched to the highest first SOC lower-limit target value and first SOC upper-limit target value, as shown in FIG. 7, and in most cases, power generation by the internal combustion engine 2 starts, thereby ensuring a higher battery output. Here, when the SOC recovery cannot keep up with the acceleration request of the driver, information on the time required to achieve the maximum output currently available and the requested output may be provided to the driver as voice information.

In this way, in the above embodiment, among the levels of the SOC lower-limit target value that is discretely set at a plurality of levels according to the battery output that needs to be ensured on the route, based on the required maximum output of the battery 5 that is predicted on the route and the correlation between the battery output and the SOC that corresponds to the battery temperature, the SOC lower limit target value that satisfies the required maximum output and is the lowest level is selected. Consequently, EV traveling can be continued for as long as possible after the start of traveling, while ensuring reliable output during uphill slopes, and the like.

As the above although one embodiment of the present invention has been explained in detail, the present invention is not limited to the above embodiment and various changes can be made to the embodiment. For example, although, in the above example, the SOC lower-limit target value is controlled in stages for simplicity of control, the SOC lower-limit target value may be configured to change continuously.

## Claims

1. A method for controlling a battery of a series hybrid vehicle including a generator driven by an internal combustion engine, a motor for traveling, and the battery for supplying power to the traveling motor, wherein power generation by the internal combustion engine is performed when an SOC of the battery decreases to a predetermined SOC lower-limit target value, and the power generation by the internal combustion engine is ended when the SOC reaches a predetermined SOC upper-limit target value, the method comprising:
determining whether a destination is set in a car navigation system;
obtaining a required maximum output of the battery that is predicted on a route to the destination, when the destination is set; and
setting the SOC lower-limit target value that satisfies the required maximum output based on the required maximum output of the battery that is predicted and a correlation between the SOC and battery output.

2. The method for controlling the battery of the series hybrid vehicle according to claim 1,
wherein the SOC lower-limit target value is pre-set at a plurality of levels, and any one of these is selectively used.

3. The method for controlling the battery of the series hybrid vehicle according to claim 2,
wherein the SOC upper-limit target value is set for each of the levels, and a lower a level of the SOC lower-limit target value is, a lower the SOC upper-limit target value is.

4. The method for controlling the battery of the series hybrid vehicle according to claim 1,
wherein a battery temperature is detected or estimated, and
wherein the correlation between the battery output and the SOC that corresponds to the battery temperature is used.

5. The method for controlling the battery of the series hybrid vehicle according to claim 1,
wherein a battery temperature is detected or estimated, and
wherein at least one of the SOC lower-limit target value and the SOC upper-limit target value is corrected such that an SOC control range between the SOC upper-limit target value and the SOC lower-limit target value is relatively widened on a high-temperature side, according to the battery temperature.

6. The method for controlling the battery of the series hybrid vehicle according to claim 1,
wherein the required maximum output of the battery is obtained based on gradient information and vehicle speed information on the route to the destination.

7. The method for controlling the battery of the series hybrid vehicle according to claim 1,
wherein weather information on the route to the destination is acquired, and a correction related to a road condition is applied to set the SOC lower-limit target value.

8. The method for controlling the battery of the series hybrid vehicle according to claim 1,
wherein when no destination is set, the SOC lower-limit target value is set relatively higher than when the destination is set.

9. The method for controlling the battery of the series hybrid vehicle according to claim 1,
wherein when no destination is set, the required maximum output of the battery is predicted within a driving range of a driver that is estimated based on learning, and based on the required maximum output of the battery that is predicted and the correlation between the battery output and the SOC, the SOC lower-limit target value that satisfies the required maximum output is set.

10. The method for controlling the battery of the series hybrid vehicle according to claim 3,
wherein when the destination is set, the SOC upper-limit target value is variably set by considering the required maximum output of the battery that is predicted on the route, based on a travel distance to the destination, a predicted regeneration amount on a downhill slope, and gradient information and vehicle speed information on the route to the destination.

11. A series hybrid vehicle comprising:
a generator driven by an internal combustion engine;
a motor for traveling;
a battery for supplying power to the traveling motor; and
a controller configured to perform power generation by the internal combustion engine when an SOC of the battery decreases to a predetermined SOC lower-limit target value, and end the power generation by the internal combustion engine when the SOC reaches a predetermined SOC upper-limit target value,
wherein the controller is configured to:
determine whether a destination is set in a car navigation system;
obtain a required maximum output of the battery that is predicted on a route to the destination, when the destination is set; and
set the SOC lower-limit target value that satisfies the required maximum output based on the required maximum output of the battery that is predicted and a correlation between the SOC and battery output.
